# EUROPÄISCHE PATENTSCHRIFT

(11) **EP 1 226 561 B1**
(45) Veröffentlichungstag und Bekanntmachung des Hinweises auf die Patenterteilung: **25.05.2005**
(21) Anmeldenummer: 00984955.5
(22) Anmeldetag: 03.11.2000
(51) Int. Cl.: G07F 7/10

(54) **REPRODUKTIONSSCHUTZ VON GEHEIMNISSEN AUF CHIPKARTEN**
PREVENTION OF REPRODUCTION OF SECRETS ON A CHIP CARD
SECURITE DE REPRODUCTION DE SECRETS SUR DES CARTES A PUCES

(30) Priorität: 05.11.1999 DE 19953321
(43) Veröffentlichungstag der Anmeldung: 31.07.2002
(73) Patentinhaber: Beta Research GmbH, 85774 Unterföhring (DE)
(72) Erfinder: FRÖHLICH, Hans-Hermann, 81673 München (DE); TÜCKE, Peter, 81541 München (DE); LÖHMANN, Ekkehard, 88236 Aulendorf (DE)
(74) Vertreter: Heselberger, Johannes
(86) Internationale Anmeldenummer: PCT/EP2000/010853
(87) Internationale Veröffentlichungsnummer: WO 2001/033521

(56) Entgegenhaltungen:
- EP-A- 0 207 376
- EP-A- 0 281 057
- WO-A-93/20538
- AT-B- 389 776
- FR-A- 2 760 871
- US-A- 5 602 915

## Beschreibung

Die vorliegende Erfindung betrifft eine Vorrichtung und ein Verfahren zum Schutze von Geheimnissen auf Chipkarten gegen unautorisiertes Kopieren des Geheimnisses auf gleichartige Chipkarten, insbesondere von Informationen zur Entschlüsselung von verschlüsselt übertragenen Daten.

Aufgrund ihres kleinen Formats, ihrer leichten Handhabbarkeit und ihrer universellen Verwendbarkeit findet man Chipkarten bei den unterschiedlichsten Anwendungen. Bei all diesen Anwendungen befinden sich auf den Chipkarten wichtige Informationen (Geheimnisse), die etwas über den Inhaber, zum Beispiel bei Krankenkassenkarten, Bibliotheksbenutzerausweisen und Zugangsberechtigungskarten, oder über ein bestimmtes Guthaben des Inhabers, zum Beispiel bei Telefon- oder Geldkarten, aussagen. Deshalb ist es wichtig, daß diese Geheimnisse auf diesen Karten nicht von Unberechtigten gelesen, verändert und kopiert werden können. Hierfür gibt es eine Reihe von Schutzfunktionen, die dieses Auslesen, Verändern und Kopieren erschweren sollen.

Die meisten Schutzfunktionen erschweren das Auslesen der Geheimnisse. Hierdurch wird der größtmögliche Schutz gewährleistet, da zusätzlich das Verändern , und Kopieren der Geheimnisse verhindert wird. Zu diesem Zweck wird durch eine mechanische Leseschutzvorrichtung wesentlich erschwert an die Geheimnisse zu kommen. So gibt es zum Beispiel Schichten, die auf den Chip aufgetragen werden und somit einen direkten visuellen Zugang zu den Speichereinheiten mit den Geheimnissen verhindern. Wenn diese Schicht allerdings entfernt wird, kann unter Verwendung eines Raster-Elektronen-Mikroskops der Inhalt des Speichers ausgelesen werden. Hier setzen weitere Schutzfunktionen an, die zum Beispiel den Inhalt der Speicher verschlüsseln.

Andere Ansätze verhindern, daß durch das Abhören des Datenflusses an der Eingangs-/Ausgangsschnittstelle der Chipkarte die Geheimnisse offenbart werden. Zu diesem Zweck werden die Geheimnisse der Chipkarte nicht übertragen, sondern nur auf der Grundlage dieser Geheimnisse in der Chipkarte Funktionen ausgeführt und die Ergebnisse dann übertragen. Eine andere Möglichkeit ist, die Geheimnisse für die Übertragung individuell zu verschlüsseln.

Diese Verfahren beruhen allerdings darauf, daß der Schlüssel für die Verschlüsselungsfunktion und am besten auch die Verschlüsselungsfunktion selber geheim sind. Es kann allerdings nicht ausgeschlossen werden, daß sowohl die Verschlüsselungsfunktion als auch der Schlüssel durch Spionage frei werden und damit eine Entschlüsselung des Geheimnisses im Speicher und der übertragenen Daten ohne weiteres möglich ist.

Die Ep 0 207 376 A zeigt einen Datenträger (Chipkarte) für die Verwendung in einem Verkaufsautomat. Die Chipkarte enthält ein Verschlüsselungsmodul zum Verschlüsseln von sensitiven Daten, bevor diese über die Kartenschnittstelle nach aussen gegeben verden.

Die Aufgabe der Erfindung ist deshalb die Bereitstellung einer Vorrichtung und eines Verfahrens durch das das unauthorisierte Verwenden von Geheimnissen, die im Speicher einer Chipkarte gespeichert sind, wesentlich erschwert wird.

Die Lösung dieser Aufgabe besteht in der Vorrichtung und in dem Verfahren, wie sie in den unabhängigen Ansprüchen beschrieben sind.

Erfindungsgemäß wird eine Chipkarte, die aus einem Trägermaterial und einem Chip besteht, wobei der Chip über eine Eingangs-/Ausgangsschnittstelle und eine Speichereinheit zur Speicherung eines Geheimnisses G verfügt, bereitgestellt, wobei der Chip eine Verschlüsselungsfunktion V aufweist, mit der die an die Chipkarte übertragenen Daten D, die später das Geheimnis G bilden, verschlüsselt werden. Das Geheimnis ist vorzugsweise für jede Chipkarte individuell. Es kann jedoch auch aus einer größeren Menge an Geheimnissen gewählt werden, so daß die Wahrscheinlichkeit des Auffindens zweier Chipkarten mit dem gleichen Geheimnis gering ist.

Im Gegensatz zu den bekannten Schutzfunktionen wird hier nicht die Erlangung des Geheimnisses erschwert, sondern es wird verhindert, daß bei Kenntnis des Geheimnisses unter Verwendung von gleichartigen Karten die Karte reproduziert werden kann (cloning).

Sollte der auf jeder Karte vorhandene Leseschutz von einem Unberechtigten überwunden worden sein, kann er das Geheimnis der Karte auslesen. Hierbei kann es sich beispielsweise um Daten (Geheimnisse) handeln, auf deren Grundlage verschlüsselt übertragene Daten entschlüsselt werden können. Daraufhin wird versucht diese Information auf eine andere Karte zu kopieren. Hierfür werden bevorzugt Karten verwendet, deren Zugangsberechtigung schon abgelaufen ist, da hier, bis auf die für den Zugang ausschlaggebenden Daten, alle notwendigen Informationen, beispielsweise das Betriebssystem, schon auf der Karte vorhanden sind. Normalerweise ist es jetzt möglich das erlangte Geheimnis einfach über die Eingangs-/Ausgangsschnittstelle auf die andere Karte zu kopieren. Erfindungsgemäß wird dies aber durch eine besondere Verschlüsselungsfunktion verhindert.

Die an die Karte übertragenen Daten (Ausgangsdaten) werden auf der Chipkarte zuerst mit einer Verschlüsselungsfunktion verändert und dann gespeichert.

Das besondere an dieser Art der Verschlüsselungsfunktion ist, daß nicht das Geheimnis verschlüsselt wird und später für die Verwendung des Geheimnisses immer wieder entschlüsselt werden muß, sondern daß die Verschlüsselung bestimmter Ausgangsdaten, etwa einer Zufallszahl, selber das Geheimnis ergeben, mit dessen Hilfe zum Beispiel übertragene Daten entschlüsselt werden können. Um dieses Geheimnis allerdings auf einer Chipkarte speichern zu können ist die Kenntnis der Ausgangsdaten und der Verschlüsselungsfunktion notwendig, um das Geheimnis berechnen zu können. Dadurch ist trotz Verwendung des gleichen Kartentyps eine Erstellung einer gleichwertigen Karte durch Kopieren des Geheimnisses nicht möglich.

Vorzugsweise handelt es sich bei der Verschlüsselungsfunktion V um eine Einwegfunktion. Durch die Verwendung der Einwegfunktion ist selbst bei Kenntnis der Verschlüsselungsfunktion und bei Kenntnis des Geheimnisses eine Berechnung der zu sendenden Daten (Ausgangsdaten) fast unmöglich. Wie bereits beschrieben ist es nicht auszuschließen, daß Unberechtigte an die Verschlüsselungsfunktion oder andere beim Betreiber geheim gehaltene Informationen durch Spionage oder über andere Kanäle kommen. Durch die Verwendung einer Einwegfunktion wird allerdings die Geheimhaltung der Verschlüsselungsfunktion überflüssig. Voraussetzung dafür ist, daß nach der Initialisierung der Chipkarte die gesendeten Daten vernichtet werden. Sowohl beim Betreiber als auch auf der Chipkarte befindet sich dann nur noch das Geheimnis. Auf der Grundlage dieses Geheimnisses kann dann auch vom Betreiber über eine Zugangsberechtigung entschieden werden. Um allerdings auf einer anderen Karte das gleiche Geheimnis speichern zu können, ist die Kenntnis der entsprechenden zu sendenden Ausgangsdaten notwendig. Diese Daten sind aber weder durch Berechnung auf der Grundlage der Einwegfunktion und des Geheimnisses, noch durch Spionage beim Betreiber, zu erlangen.

Die vorliegende Erfindung bezieht sich auch auf ein Verfahren zum Schutz eines Geheimnisses G auf einer Chipkarte, die eine Eingangs-/Ausgangsschnittstelle und eine Speichereinheit zur Speicherung des Geheimnisses G aufweist, wobei die Daten die der Chipkarte zugeführt werden mittels einer Verschlüsselungsfunktion V in dem Chip verschlüsselt werden.

Vorzugsweise handelt es sich bei der Verschlüsselungsfunktion V um eine Einwegfunktion.

Die vorliegende Erfindung wird beispielhaft in den Figuren 1 bis 3 dargestellt. Es zeigt:
- Figur 1:: Das Verfahren, wie aus den Daten D unter Verwendung der Einwegfunktion V das Geheimnis G 1 erzeugt und im Speicher der Chipkarte gespeichert wird.
- Figur 2:: Ein möglicher Vorgang, mit dem ein Unberechtigter versucht das ermittelte Geheimnis G 1 auf einer Chipkarte des gleichen Betreibers zu speichern.
- Figur 3:: Ein Vergleich, der Verwendung der Original-Chipkarte mit der Verwendung der kopierten Chipkarte.

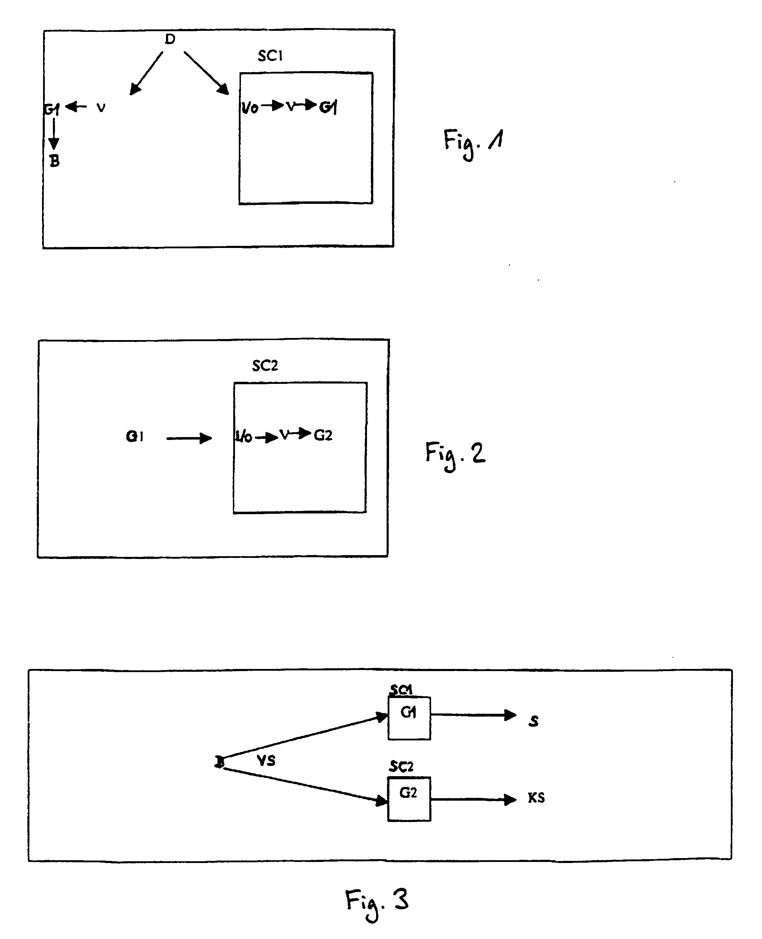

Figur 1 zeigt, wie die Daten D bei der Initialisierung der Chipkarte SC 1 an die Eingangs-/Ausgangsschnittstelle i/o der Chipkarte SC 1 übertragen werden. Dort werden die Daten an die Verschlüsselungsfimktion V, hier eine Einwegfunktion, weitergeleitet und verschlüsselt. Die verschlüsselten Daten D sind jetzt das Geheimnis G 1. Parallel berechnet auch der Betreiber der Chipkarte aus den Daten D auf der Grundlage der Einwegfunktion V das Geheimnis G 1 und speichert dies. Anschließend werden die Daten D gelöscht. Die Daten können beispielsweise das Format ASCII oder HEX haben und bei den Einwegfunktion kann es sich um Funktionen handeln, die unter den Bezeichnungen MD5 (Message Digest Nr. 5) und SHA-1 (Secure Hash Algorithm Nr. 1) bekannt sind.

In Figur 2 wurde das Geheimnis G 1 einer Chipkarte SC 1 mit gültiger Informationen zur Entschlüsselung ermittelt und wird nun versucht auf eine Chipkarte SC 2 des gleichen Betreibers ohne gültige Informationen zur Entschlüsselung zu speichern. Dabei wird das ermittelte Geheimnis G 1 über die Eingangs-/ Ausgangsschnittstelle i/o der Chipkarte SC 2 an die Chipkarte SC 2 übertragen. Hier wird das Geheimnis G 1 an die Einwegfunktion V weitergeleitet und dort auf der Grundlage der Einwegfunktion V verschlüsselt. Bei dem verschlüsselten Geheimnis G 1 handelt es sich um einen Wert G 2, der nicht mit dem Geheimnis G 1 identisch ist.

In Figur 3 wird gezeigt, daß wenn die Original-Chipkarte SC 1 mit dem Geheimnis G 1 zum Beispiel für die Entschlüsselung von Daten verwendet wird, die der Betreiber B unter Verwendung eines verschlüsselten Signals VS an den Benutzer mit der Chipkarte SC 1 überträgt, daß dann das Geheimnis G 1 der Chipkarte SC 1 für die Entschlüsselung der übertragenen Informationen zu einem verwendbaren Signal S, aufgrund dessen zum Beispiel Filme übertragen werden können, verwendet werden kann. Sollte aber die kopierte Chipkarte SC 2 mit dem Geheimnis G 2 für die Entschlüsselung der übertragenen Daten verwendet werden, dann werden die übertragenen Informationen zu einem nicht verwendbaren Signal KS entschlüsselt und können deshalb nicht von dem unberechtigten Benutzer verwendet werden.

Die vorliegende Erfindung stellt damit eine Vorrichtung und ein Verfahren zur Verfügung, das den Schutz von Geheimnissen auf Chipkarten gegen unautorisiertes Kopieren, insbesondere von Informationen zur Entschlüsselung von Daten, ermöglicht.

Dieses Verfahren kann zum Beispiel im Rahmen des digitalen kommerziellen Fernsehens verwendet werden. Hier offeriert der Provider gewisse Dienste dem Endkunden, der dafür ein gewisses Entgelt entrichtet. Um die Entgeltentrichtung durch den Kunden sicherzustellen, werden die Dienste in der Regel verschlüsselt angeboten. Der Betreiber stattet nun den Kunden mit einer Chipkarte aus, mit deren Hilfe der Kunde das verschlüsselte Angebot entschlüsseln kann. Dabei kann mit der Hilfe des vorliegenden Erfindung das erstellen eines Duplikats auf der Basis einer abgelaufenen Chipkarte wirksam verhindert werden.

## Patentansprüche

1. Chipkarte (SC) mit Mitteln zum Bilden eines Geheimnisses (G), insbesondere zur Entschlüsselung von verschlüsselt übertragenen Daten, auf der Chipkarte (SC) mit Schutz gegen unautorisiertes Kopieren des Geheimnisses (G) auf gleichartige Chipkarten wobei die Chipkarte (SC) aus einem Trägermaterial und einem Chip besteht, wobei der Chip aufweist:
- eine Eingangs-/ Ausgangsschnittstelle (i/o),
- eine Verschlüsselungsfunktion (V) zur Veränderung von bei der Initialisierung an die Eingangs-/ Ausgangsschnittstelle (i/o) der Chipkarte (SC) übertragenen Ausgangs-Daten (D) zur Bildung des Geheimnisses (G), welches zur Entschlüsselung von verschlüsselt übertragenen Daten verwendet wird, wodurch ein einfaches Kopieren eines Geheimnisses (G) über die Eingangs-/ Ausgangsschnittstelle (i/o) auf die Chipkarte (SC) verhindert wird und
- eine Speichereinheit zur Speicherung des durch das Verändern der Ausgangs-Daten (D) gebildeten Geheimnisses (G).

2. Chipkarte (SC) nach Anspruch 1, **dadurch gekennzeichnet, dass** es sich bei der Verschlüsselungsfunktion (V) um eine Einwegfunktion handelt.

3. Verfahren zum Bilden eines Geheimnisses (G), insbesondere zur Entschlüsselung von verschlüsselt übertragenen Daten auf einer Chipkarte (SC) mit Schutz gegen unautorisiertes Kopieren des Geheimnisses (G) auf gleichartige Chipkarte (SC), wobei die Chipkarte aus einem Trägermaterial und einem Chip besteht und der Chip eine Eingangs-/ Ausgangsschnittstelle (i/o), eine Verschlüsselungsfunktion (V) und eine Speichereinheit zur Speicherung des Geheimnisses (G) aufweist, wobei das Verfahren folgende Schritte aufweist:
- Übertragen von Ausgangs-Daten (D) an die Eingangs-/ Ausgangsschnittstelle (i/o) der Chipkarte (SC) bei der Initialisierung,
- Verändern der an die Eingangs-/ Ausgangsschnittstelle (i/o) der Chipkarte (SC) bei der Initialisierung übertragenen Ausgangs-Daten (D) mittels einer Verschlüsselungsfunktion (V) zur Bildung des Geheimnisses (G), welches zur Entschlüsselung von verschlüsselt übertragenen Daten verwendet wird, wodurch ein einfaches Kopieren eines Geheimnisses (G) über die Eingangs-/ Ausgangsschnittstelle (i/o) auf die Chipkarte (SC) verhindert wird und
- Speichern des durch das Verändern der Ausgangs-Daten (D) gebildeten Geheimnisses (G) in der Speichereinheit.

4. Verfahren nach Anspruch 3, **dadurch gekennzeichnet, dass** es sich bei der Verschlüsselungsfunktion (V) um eine Einwegfunktion handelt.

## Claims

1. Chipcard (SC) having means for creating a secret (G) especially for the decoding of data transmitted encoded, on the chipcard (SC) with protection against unauthorised copying of the secret (G) onto similar chipcards wherein the chipcard (SC) consists of a carrier material and a chip, wherein the chip comprises:
- an inlet-/ outlet interface (i/o)
- an encoding function (V) for changing of outlet data (D) transmitted at the initialisation to the inlet-/ outlet interface (i/o) of the chipcard (SC) for the creation of the secret (G), which will be used for the decoding of the data transmitted encoded, whereby a simple copying of a secret (G) via the inlet-/ outlet interface (i/o) onto the chipcard (SC) is prevented and
- a memory unit for storing the secret (G) created by the changing of the outlet data (D)

2. Chipcard (SC) according to claim 1, **characterised in that** the encoding function (V) is a one-way function.

3. Method for creating a secret (G) especially for the decoding of data transmitted encoded onto a chipcard (SC) with protection against unauthorised copying of the secret (G) onto similar chipcards (SC) wherein the chipcard consists of a carrier material and a chip and the chip comprises an inlet-/ outlet interface (i/o), an encoding function (V) and a memory unit for storing the secret (G), wherein the method comprises the following steps:
- transmitting of outlet data (D) to the inlet-/ outlet interface (i/o) of the chipcard (SC) at the initialisation,
- changing the outlet data (D) transmitted to the inlet-/ outlet interface (i/o) of the chipcard (SC) at the initialisation by means of an encoding function (V) for the creation of secret (G), which is used for the decoding of data transmitted encoded, whereby a simple copying of secret (G) via the inlet-/outlet interface (i/o) onto the chipcard (SC) is prevented and
- storing the secret (G) created by changing the outlet data (D) in the memory unit.

4. Method according to claim 3, **characterised in that** the encoding function (V) is a one-way function.

## Revendications

1. Carte à puce (SC) avec des moyens pour former un secret (G), en particulier pour décoder des données transmises sous forme codée, sur la carte à puce (SC) avec une protection contre une copie non autorisée du secret (G) sur des cartes à puces de même type, la carte à puce (SC) étant constituée d'un matériau porteur et d'une puce, la puce comprenant :
- une interface d'entrée/sortie (i/o),
- une fonction de codage (V) pour modifier des données de sortie (D) transmises à l'interface d'entrée/sortie (i/o) de la carte à puce lors de l'initialisation pour former le secret (G), lequel est utilisé pour décoder des données transmises sous forme codée, ce qui a pour effet d'empêcher une copie simple d'un secret (G) sur la carte à puce (SC) par l'intermédiaire de l'interface d'entrée/sortie (i/o), et
- un module de mémoire pour mémoriser le secret (G) formé par la modification des données de sortie (D).

2. Carte à puce (SC) selon la revendication 1, **caractérisée en ce que** la fonction de codage (V) est une fonction unidirectionnelle.

3. Procédé pour former un secret (G), en particulier. pour décoder des données transmises sous forme codée, sur une carte à puce (SC) avec une protection contre une copie non autorisée du secret (G) sur une carte à puce de même type, la carte à puce (SC) étant constituée d'un matériau porteur et d'une puce, et la puce comprenant une interface d'entrée/sortie (i/o), une fonction de codage (V) et un module de mémoire pour mémoriser le secret (G), le procédé comportant les étapes suivantes :
- transmission de données de sortie (D) à l'interface d'entrée/sortie (i/o) de la carte à puce (SC) lors de l'initialisation,
- modification des données de sortie (D) transmises à l'interface d'entrée/sortie (i/o) de la carte à puce (SC) lors de l'initialisation au moyen d'une fonction de codage (V) pour former le secret (G), lequel est utilisé pour décoder des données transmises sous forme codée, ce qui a pour effet d'empêcher une copie simple d'un secret (G) sur la carte à puce (SC) par l'intermédiaire de l'interface d'entrée/sortie (i/o), et
- mémorisation, dans le module de mémoire, du secret formé par la modification des données de sortie (D).

4. Procédé selon la revendication 3, **caractérisé en ce que** la fonction de codage (V) est une fonction unidirectionnelle.
